# EUROPEAN PATENT APPLICATION

(11) **EP 4 675 785 A1**
(43) Date of publication of application: **07.01.2026**
(21) Application number: 24186166.5
(22) Date of filing: 03.07.2024
(51) Int. Cl.: H01M 50/204, B60K 1/04, B60L 50/64, H01M 50/242, H01M 50/244, H01M 50/249, H01M 50/30

(54) **BATTERY HOUSING WITH EXTERNAL FRAME**

(71) Applicant: VOLVO TRUCK CORPORATION, 405 08 Göteborg (SE)
(72) Inventor: SAHLIN, Gunnar, 423 38 TORSLANDA (SE); MOCANOSKI, Dragan, 434 91 KUNGSBACKA (SE); LIND, Jonas, 415 71 GÖTEBORG (SE); TORELL, Magnus, 444 41 STENUNGSUND (SE)
(74) Representative: Kransell & Wennborg KB

(57) **Abstract**

A battery arrangement (100) comprising: a battery housing (102) configured to hold at least one battery module, wherein the battery housing is configured to form an encapsulation layer for the at least one battery module; a first frame (104) arranged on a first side of the battery housing; a second frame (106) arranged on a second side of the battery housing, the second side being opposite the first side; and at least one transversal connection element (108) arranged to connect the first frame to the second frame; wherein the battery housing comprises at least one protruding region (1 10a-b) on an outer sidewall and wherein the first frame is configured to have an opening (112) at the location of the at least one protruding region so that the protruding region is at least partially arranged in the opening of the first frame.

## Description

### TECHNICAL FIELD

The disclosure relates generally to a battery housing. In particular aspects, the disclosure relates to a battery housing comprising an external frame in the form of an exo-skeleton. The battery housing is suitable for use in an energy storage system which for example may be used in an electrical or hybrid vehicle. The disclosure can be applied to heavy-duty vehicles, such as trucks, buses, and construction equipment, among other vehicle types. The described battery housing may also be used for marine vessels and/or for stationary implementations, such as in a building and/or any stationary machinery. Although the disclosure may be described with respect to a particular implementation, the disclosure is not restricted to a particular vehicle.

### BACKGROUND

With the increasing adoption of electric and hybrid vehicles, the design and efficiency of battery arrangements have become important areas of focus. Battery systems in these vehicles must meet stringent requirements for safety, performance, and durability. Traditional battery arrangements often involve battery modules housed within a protective casing, which serves to shield the batteries from environmental factors and mechanical impacts. Conventional battery housings are therefore typically made from robust materials to ensure structural integrity and protection. Battery housings must be able to withstand various loads and stresses during vehicle operation, including vibrations, shocks, and impacts from collisions.

In addition to the mechanical requirements, battery housings must also provide adequate thermal management to maintain the optimal operating temperature of the battery cells. Effective thermal management is essential for the performance, safety, and longevity of the battery system. Ventilation channels, cooling systems, and other thermal management solutions are commonly integrated into the design of the battery housing.

Despite advancements in battery technology, there remains a need for improved battery arrangements that can offer enhanced structural support, reduced weight, and better thermal management without compromising safety or performance.

### SUMMARY

According to a first aspect of the disclosure, there is provided a battery arrangement comprising: a battery housing configured to hold at least one battery module, wherein the battery housing is configured to form an encapsulation layer for the at least one battery module; a first frame arranged on a first side of the battery housing; a second frame arranged on a second side of the battery housing, the second side being opposite the first side; at least one transversal connection element arranged to connect the first frame to the second frame; and wherein the battery housing comprises at least one protruding region on an outer sidewall and wherein the first frame is configured to have an opening at the location of the at least one protruding region so that the protruding region is at least partially arranged in the opening of the first frame.

A technical advantage of the described battery arrangement may include that the use of the described first and second frame, which also may be referred to as an exo-skeleton, enables a reduction in material thickness of the battery housing, thereby reducing the weight of the battery housing. The reduction in material thickness is enabled by configuring the exo-skeleton frame to absorb and distribute mechanical stresses that would otherwise have to be absorbed by the battery housing as such. The described separation of structural support from the encapsulation layer formed by the battery housing thereby allows the battery housing to be made from thinner materials. Furthermore, the reduced thickness of the battery housing walls facilitated by the exo-skeleton design allows for increased internal volume within the battery housing. This increased available internal volume can for example be utilized for more effective thermal management systems, such as improved ventilation channels or additional cooling.

Moreover, the protruding regions may further increase the internal volume of the battery housing without increasing the overall external volume of the battery arrangement. The additional volume created by the protruding regions may be used to provide additional functionality and/or to facilitate increased battery capacity. The described frame structure also allows for a greater flexibility in dimensions of the battery housing, thus easing required manufacturing tolerances which in turn may lead to reduced cost and complexity of manufacturing.

Optionally in some examples, including in at least one preferred example, the protruding region is housing a vent channel of the battery housing configured to vent gases ejected from a battery module in the event of thermal runaway. A technical benefit may include the ability to safely vent gases from the battery module, preventing pressure build-up and potential explosion, thus enhancing the safety of the battery arrangement during thermal runaway events. Moreover, by arranging the vent channel in the protruding region of the battery housing wall, the volume of the vent channel can be increased with maintained internal volume of the battery housing which improves gas flow in the vent channel, and which also provides additional room in the vent channel for e.g. particle filters.

Optionally in some examples, including in at least one preferred example, each vent channel comprises at least one valve configured to open when a pressure in the channel exceeds a threshold pressure. A technical benefit may include the controlled release of gases only when necessary, ensuring that venting occurs only under unsafe conditions such as in the event of thermal runaway in a battery cell, thereby maintaining the structural integrity of the battery housing under normal operating conditions.

Optionally in some examples, including in at least one preferred example, the battery housing comprises a plurality of protruding regions forming recessed regions therebetween, and wherein at least one of the first and second frame is configured to be arranged in the recessed regions. A technical benefit may include improved structural integration of the frames with the battery housing, leading to enhanced stability and rigidity of the battery arrangement while also optimizing space utilization of the battery arrangement when installed in a vehicle.

Optionally in some examples, including in at least one preferred example, each of the first frame and the second frame is configured to follow an outer profile of a respective sidewall of the battery housing. A technical benefit may include a more secure fit and better load distribution along the sidewalls of the battery housing, improving the overall mechanical strength and resistance to deformation of the battery housing. Arranging the different frame elements along the outer profile also provides protection of the corners and edges of the battery housing. The frame elements may also be configured to extend slightly outside of the profile of the battery housing for additional protection.

Optionally in some examples, including in at least one preferred example, the first and second frame and the at least one transversal connection element are configured to form a load-bearing structure. A technical benefit may include the ability to support and distribute external loads, such as those encountered during driving or collisions, thus protecting the integrity of battery modules in the battery housing and enhancing the safety of the battery arrangement.

Optionally in some examples, including in at least one preferred example, the battery arrangement may further comprise a bottom frame element arranged to connect the first frame to the second frame. A technical benefit may include added structural support at the base of the battery arrangement, further enhancing the rigidity and stability of the entire arrangement.

Optionally in some examples, including in at least one preferred example, the bottom frame element may be a bottom plate. A technical benefit may include providing a continuous and robust base support, which can effectively distribute loads and resist impacts from below, contributing to the overall protection and durability of the battery arrangement.

Optionally in some examples, including in at least one preferred example, the battery arrangement further comprises a mounting bracket transversally arranged between the first frame and the second frame, the mounting bracket being configured to mount the battery arrangement to a vehicle chassis. A technical benefit may include secure attachment of the battery arrangement to the vehicle chassis, ensuring stability during vehicle operation and enhancing safety by keeping the battery arrangement firmly in place.

Optionally in some examples, including in at least one preferred example, the mounting bracket is mechanically connected to the first frame and to the second frame, and mechanically decoupled from the battery housing. A technical benefit may include reducing the transmission of vibrations and shocks from the vehicle chassis to the battery modules, thereby protecting the battery housing and its contents from mechanical stress and potential damage.

Optionally in some examples, including in at least one preferred example, the mounting bracket further comprises a plurality of vibration dampening elements configured to be arranged between the mounting bracket and the vehicle chassis to reduce mechanical vibrations therebetween. A technical benefit may include enhanced isolation of the battery arrangement from vehicle vibrations, leading to increased longevity and reliability of the battery modules by minimizing mechanical wear and tear.

Optionally in some examples, including in at least one preferred example, the transversal connection element is a rod. A technical benefit may include a simple yet effective means of connecting the frames, providing necessary structural support while being easy to manufacture and install.

Optionally in some examples, including in at least one preferred example, the first frame and second frames are attached to the battery housing by screws arranged in threaded screw openings of the battery housing. A technical benefit may include secure and reliable attachment of the frames to the battery housing, ensuring structural integrity and ease of assembly and maintenance.

Optionally in some examples, including in at least one preferred example, further comprising sealant washers configured to environmentally seal the screw openings. A technical benefit may include preventing ingress of moisture and contaminants through the screw openings, thereby protecting the internal components of the battery housing.

Optionally in some examples, including in at least one preferred example, the sealant washers are arranged between the first and/or second frame and the battery housing. A technical benefit may include providing an additional layer of environmental sealing and mechanical cushioning between the frames and the battery housing, further enhancing the protection against environmental factors and mechanical stress.

Optionally in some examples, including in at least one preferred example, the first frame and the second frame are made of a lightweight metal alloy. A technical benefit may include reducing the overall weight of the battery arrangement while maintaining high strength and durability, contributing to improved vehicle efficiency and performance.

Optionally in some examples, including in at least one preferred example, the bottom frame element further includes reinforcement ribs to enhance structural integrity. A technical benefit may include increased resistance to deformation and improved load distribution across the bottom frame element, further enhancing the structural stability and protection of the battery housing.

Optionally in some examples, including in at least one preferred example, the at least one transversal connection element is configured to be adjustable to adapt to geometric variations of the battery housing due to manufacturing tolerances. A technical benefit may include the ability to accommodate variations in the manufacturing process, ensuring a precise and secure fit of the battery arrangement components, thereby improving assembly efficiency and product consistency.

Optionally in some examples, including in at least one preferred example, the load-bearing structure formed by the first frame, second frame, and transversal connection elements is configured to absorb and dissipate impact energy during a collision, protecting the battery modules from damage. A technical benefit may include enhanced safety and protection of the battery modules during collisions, by effectively absorbing and dissipating impact energy, thereby reducing the risk of damage and potential hazards. Moreover, configuring the frames to form a load-bearing exo-skeleton eliminates the need for a load-bearing battery housing.

According to a second aspect, there is provided a vehicle comprising a battery arrangement according to any one of the preceding examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary illustration of a battery arrangement according to an example.
**FIG. 2** is an exemplary illustration of details of a battery arrangement according to an example.
**FIG. 3** is an exemplary illustration of details of a battery arrangement according to an example.
**FIG. 4** is an exemplary illustration of details of a battery arrangement according to an example.
**FIG. 5** is an exemplary illustration of details of a battery arrangement according to an example.
**FIG. 6** is an exemplary illustration of a battery arrangement arranged in a vehicle according to an example.
**FIG. 7** is an exemplary illustration of a vehicle comprising a battery arrangement according to an example.

### DETAILED DESCRIPTION

The detailed description set forth below provides information and examples of the disclosed technology with sufficient detail to enable those skilled in the art to practice the disclosure.

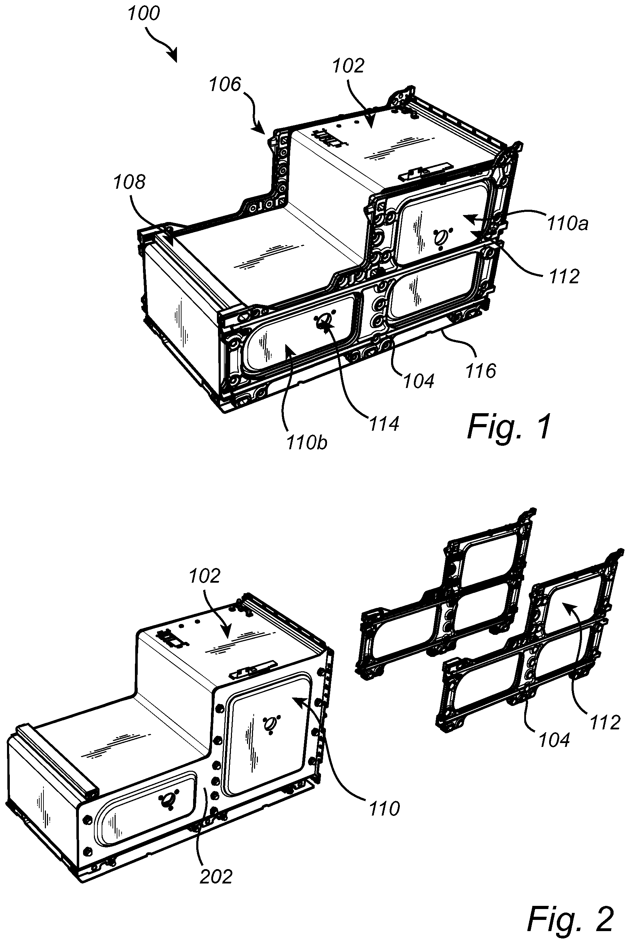

FIG. 1 is an exemplary illustration of a battery arrangement (100) according to example embodiments. The battery arrangement 100 comprises a battery housing 102 configured to hold at least one battery module and the battery housing is configured to form an encapsulation layer for the at least one battery module. The battery housing 102 is thereby a unit holding a plurality of battery cells, which may be stacked and arranged as battery modules, and the associated circuitry required for operating the battery cells.

The battery arrangement further comprises a first frame 104 arranged on a first side of the battery housing, a second frame 106 arranged on a second side of the battery housing, the second side being opposite the first side, and at least one transversal connection element 108 arranged to connect the first frame 104 to the second frame 106. The first and second frames 104, 106 together with the connection element thereby form a structure which can be described as an exo-skeleton arranged around the battery housing 102. In FIG. 1, the battery housing 102 has a stepwise appearance, but in principle any shape and configuration of a battery housing could utilize the described exo-skeleton.

FIG. 2 is an exploded view more clearly illustrating the recessed region 202 formed between the protruding regions 1 10a-b. The opening of the first frame 104 is here configured to follow the profile of the corresponding protruding region 110a so that the protruding region 110a fills the opening, thereby ensuring a secure and well aligned fit of the frame 104 in relation to the battery housing 102.

As further illustrated in FIG. 1, the battery housing 102 further comprises at least one protruding region 1 10a-b on an outer sidewall of the battery housing 102, and the first frame 104 is configured to have an opening 112 at the location of the at least one protruding region 1 10a-b so that the protruding region 1 10a-b is at least partially arranged in the opening 112 of the first frame 104. The same configuration is used also on the second side of the battery housing and for the second frame 106, but only one side will be illustrated and discussed for simplicity.

The protruding regions 1 10a-b form an integral part of the sidewall of the battery housing 102, and the additional volume formed by the protruding regions 110a-b may be used to either increase the inner volume of the battery housing 102, or to house vent channels and the like which will be described in further detail in the following. Moreover, the location shape and distribution of protruding regions can be selected based on the requirements of a particular implementation, and the illustrated battery arrangement serves as an example describing the general concept of using an exo-skeleton for a battery arrangement.

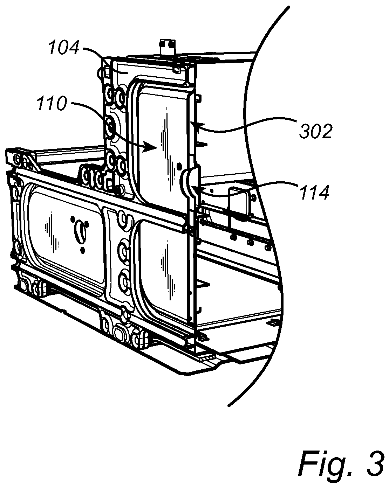

In the example battery arrangement illustrated in Fig. 1, the protruding regions 1 10a-b are housing a vent channel 302 as further illustrated in the cross section view of FIG. 3. The vent channel 302 is configured to vent gases ejected from a battery module in the event of thermal runaway. Moreover, the battery housing 102 comprises at least one valve 114 for each vent channel 302, where the valve 114 is configured to open when a pressure in the channel 302 exceeds a threshold pressure. In the illustrated example, the valve 114 is shown as an opening but in an operational battery arrangement 100, the valve 114 is closed to ensure that the inner volume of the battery housing 102 is environmentally sealed during normal operation.

As illustrated in FIG. 1, each of the first frame 104 and the second frame 106 is configured to follow an outer profile of a respective sidewall of the battery housing 102 so that the frames in practice form an outer cage around the battery housing 102, covering and protecting edges of the battery housing 102. Moreover, the first and second frames 104, 106 together with the transversal connection element 108, here illustrated as a rod 108, are preferably configured to form a load-bearing structure for the battery arrangement 100 as a whole so that the battery housing can be made without having to consider load bearing requirements. The battery arrangement 100 further comprises a bottom frame element 116 in the form of a bottom plate 116 arranged to connect the first frame 104 to the second frame 106. The bottom frame element may in principle comprise rods, brackets or one or more frames similar the first and second frames 104, 106 arranged on the sides of the battery housing 102.

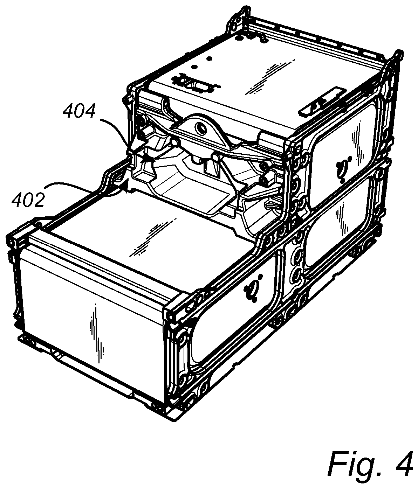

FIG. 4 illustrates a battery arrangement further comprising a mounting bracket 402 transversally arranged between the first frame 104 and the second frame 106, the mounting bracket being configured to mount the battery arrangement 100 to a vehicle chassis. The mounting bracket is mechanically connected to the first frame 104 and to the second frame 106, and it is mechanically decoupled from the battery housing 102, so that any loads transferred via the mounting bracket are taken up by the frames and not directly by the battery housing. The mounting bracket 402 may further comprise a vibration dampening element such as one or more rubber bushings to be arranged between a central portion 404 of the mounting bracket 402 and the vehicle chassis in order to reduce mechanical vibrations therebetween. The illustrated central portion 404 of the mounting bracket 402 is thereby configured to receive a dampening element during installation of the battery arrangement 100.

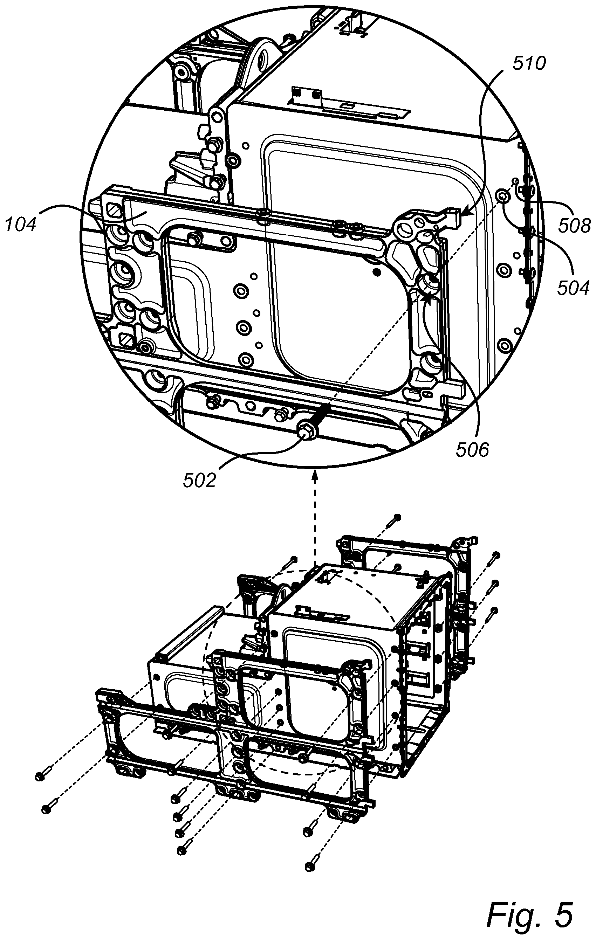

FIG. 5 illustrates that the first frame 104 and the second frame 106 is attached to the battery housing using screws 502 arranged in respective threaded screw openings 508 of the battery housing 102, using sealant washers 504 arranged between the first and second frame 104, 106 and the battery housing 102, the sealant washers 504 being configured to environmentally seal the screw openings 508. The first and second frames 104, 106 comprises corresponding openings 506 for receiving the screws 502 to thereby attach the frames to the battery housing 102.

The load-bearing structure formed by the first frame 104, the second frame 106, and transversal connection element 108 is preferably configured to absorb and dissipate impact energy during a collision, protecting the battery housing 102 from damage. As further illustrated in Fig. 5, each of the first and second frame 104, 106 comprises a fastening point 510 at an end portion of the frame configured to be positioned towards a side of the vehicle. The fastening point 510 is adapted to be connected to a crash protection structure (not shown) of the vehicle, and the opposite end portion of the frame is mechanically coupled to the chassis so that loads imparted on the crash protection structure are transferred via the first and second frames to the chassis, thereby protecting the battery housing 102 from impact damage in case of a side impact of the vehicle. As illustrated in Fig. 5, each of the first and second frame 104, 106 may comprise a plurality of fastening point 510 for crash protection. The described frames 104, 106 are thereby designed to work as load path from an outer crash structure towards the 402 mounting bracket, separating the load path from the battery encapsulation 102 and protecting the battery modules.

The battery arrangement 100 further is configured to be adjustable to adapt to geometric variations of the battery housing 102 due to manufacturing tolerances. The length of the at least one transversal connection element 108 may be fixed to thereby determine the distance between the first and second frame elements 104, 106. The battery housing 102 is designed to be slightly smaller than the available space between the frames 104, 106 and any gaps between the outer wall of the battery housing 102 and a frame is handled by pressing on the battery housing wall from the inside of the battery housing 102 to eliminate any gap/space between the battery housing 102 and the frames 104, 106. The battery housing 102 thus has a certain degree of flexibility to allow expansion. Moreover, pressing on the inner wall of the battery housing 102 can in principle be achieved in a range of different ways using for example screws, washers, shims, wedges or the like, for example arranged between the battery modules and the housing wall.

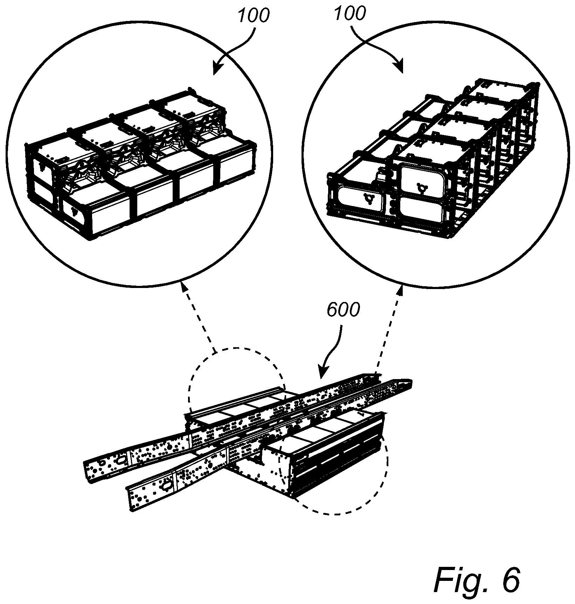

FIG. 6 schematically illustrate how a plurality of battery arrangements 100 as described above can be connected to a vehicle chassis 600 by attaching the mounting brackets 402 to corresponding attachment points of the vehicle chassis 600.

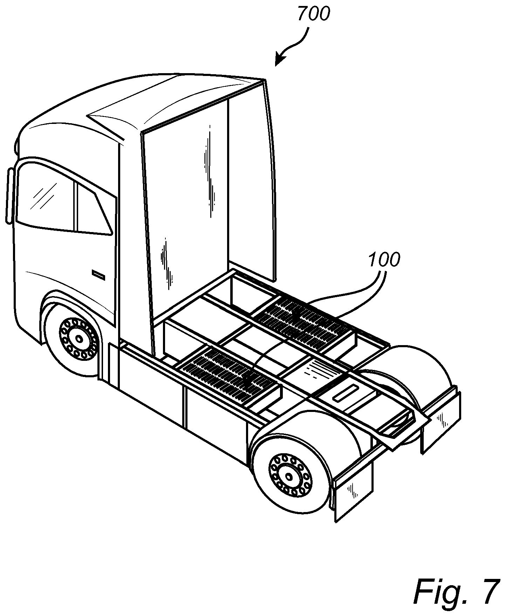

FIG. 7 schematically illustrates a vehicle 700 comprising battery arrangements 100 according to the above described examples
Example 1. A battery arrangement (100) comprising: a battery housing (102) configured to hold at least one battery module, wherein the battery housing is configured to form an encapsulation layer for the at least one battery module; a first frame (104) arranged on a first side of the battery housing; a second frame (106) arranged on a second side of the battery housing, the second side being opposite the first side; and at least one transversal connection element (108) arranged to connect the first frame to the second frame; wherein the battery housing comprises at least one protruding region (1 10a-b) on an outer sidewall and wherein the first frame is configured to have an opening (112) at the location of the at least one protruding region so that the protruding region is at least partially arranged in the opening of the first frame.
Example 2. The battery arrangement according to example 1, wherein the protruding region is housing a vent channel (302) of the battery housing configured to vent gases ejected from a battery module in the event of thermal runaway.
Example 3. The battery arrangement according to example 2, wherein each vent channel comprises at least one valve (114) configured to open when a pressure in the channel exceeds a threshold pressure.
Example 4. The battery arrangement according to any one of the preceding examples, wherein the battery housing comprises a plurality of protruding regions (110a-b) forming recessed regions (202) therebetween, and wherein at least one of the first and second frame is configured to be arranged in the recessed regions.
Example 5. The battery arrangement according to any one of the preceding examples, wherein each of the first frame and the second frame is configured to follow an outer profile of a respective sidewall of the battery housing.
Example 6. The battery arrangement according to any one of the preceding examples, wherein the first and second frame and the at least one transversal connection element are configured to form a load-bearing structure.
Example 7. The battery arrangement according to any one of the preceding examples, further comprising a bottom frame element (116) arranged to connect the first frame to the second frame.
Example 8. The battery arrangement according to example 7, wherein the bottom frame element is a bottom plate (116).
Example 9. The battery arrangement according to any one of the preceding examples, further comprising a mounting bracket (402) transversally arranged between the first frame and the second frame, the mounting bracket being configured to mount the battery arrangement to a vehicle chassis (600).
Example 10. The battery arrangement according to example 9, wherein the mounting bracket is mechanically connected to the first frame and to the second frame, and mechanically decoupled from the battery housing.
Example 11. The battery arrangement according to example 9 or 10, wherein the mounting bracket further comprises a plurality of vibration dampening elements (404) configured to be arranged between the mounting bracket and the vehicle chassis (600) to reduce mechanical vibrations therebetween.
Example 12. The battery arrangement according to any one of the preceding examples, wherein the transversal connection element is a rod.
Example 13. The battery arrangement according to any one of the preceding examples, wherein the first frame and the second frame is attached to the battery housing by screws (502) arranged in threaded screw openings (508) of the battery housing
Example 14. The battery arrangement according to example 13, further comprising sealant washers (504) configured to environmentally seal the screw openings.
Example 15. The battery arrangement according to example 14, wherein the sealant washers are arranged between the first and/or second frame (104, 106) and the battery housing (102).
Example 16. The battery arrangement according to any one of the preceding examples, wherein the first frame and the second frame are made of a lightweight metal alloy.
Example 17. The battery arrangement according to example 7 or 8, wherein the bottom frame element further includes reinforcement ribs to enhance structural integrity.
Example 18. The battery arrangement according to any one of the preceding examples, wherein the battery arrangement is configured to be adjustable to adapt to geometric variations of the battery housing due to manufacturing tolerances.
Example 19. The battery arrangement according to any one of the preceding examples, wherein the load-bearing structure formed by the first frame, the second frame, and the transversal connection element is configured to absorb and dissipate impact energy during a collision, protecting the battery housing from damage.
Example 20. A vehicle (700) comprising a battery arrangement according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery arrangement (100) comprising:
a battery housing (102) configured to hold at least one battery module, wherein the battery housing is configured to form an encapsulation layer for the at least one battery module;
a first frame (104) arranged on a first side of the battery housing;
a second frame (106) arranged on a second side of the battery housing, the second side being opposite the first side; and
at least one transversal connection element (108) arranged to connect the first frame to the second frame;
wherein the battery housing comprises at least one protruding region (110a-b) on an outer sidewall and wherein the first frame is configured to have an opening (112) at the location of the at least one protruding region so that the protruding region is at least partially arranged in the opening of the first frame.

2. The battery arrangement according to claim 1, wherein the protruding region is housing a vent channel (302) of the battery housing configured to vent gases ejected from a battery module in the event of thermal runaway.

3. The battery arrangement according to claim 2, wherein each vent channel comprises at least one valve (114) configured to open when a pressure in the channel exceeds a threshold pressure.

4. The battery arrangement according to any one of the preceding claims, wherein the battery housing comprises a plurality of protruding regions (110a-b) forming recessed regions (202) therebetween, and wherein at least one of the first and second frame is configured to be arranged in the recessed regions.

5. The battery arrangement according to any one of the preceding claims, wherein each of the first frame and the second frame is configured to follow an outer profile of a respective sidewall of the battery housing.

6. The battery arrangement according to any one of the preceding claims, wherein the first and second frame and the at least one transversal connection element are configured to form a load-bearing structure.

7. The battery arrangement according to any one of the preceding claims, further comprising a bottom frame element (116) arranged to connect the first frame to the second frame.

8. The battery arrangement according to claim 7, wherein the bottom frame element is a bottom plate (116).

9. The battery arrangement according to any one of the preceding claims, further comprising a mounting bracket (402) transversally arranged between the first frame and the second frame, the mounting bracket being configured to mount the battery arrangement to a vehicle chassis (600).

10. The battery arrangement according to claim 9, wherein the mounting bracket is mechanically connected to the first frame and to the second frame, and mechanically decoupled from the battery housing.

11. The battery arrangement according to claim 9 or 10, wherein the mounting bracket further comprises a plurality of vibration dampening elements (404) configured to be arranged between the mounting bracket and the vehicle chassis (600) to reduce mechanical vibrations therebetween.

12. The battery arrangement according to any one of the preceding claims, wherein the transversal connection element is a rod.

13. The battery arrangement according to any one of the preceding claims, wherein the battery arrangement is configured to be adjustable to adapt to geometric variations of the battery housing due to manufacturing tolerances.

14. The battery arrangement according to any one of the preceding claims, wherein the load-bearing structure formed by the first frame, the second frame, and the transversal connection element is configured to absorb and dissipate impact energy during a collision, protecting the battery housing from damage.

15. A vehicle (700) comprising a battery arrangement according to any one of the preceding claims.
